# EUROPÄISCHE PATENTANMELDUNG

(11) **EP 0 694 555 A1**
(43) Veröffentlichungstag der Anmeldung: **31.01.1996**
(21) Anmeldenummer: 95111499.0
(22) Anmeldetag: 21.07.1995
(51) Int. Cl.: C07F 9/40, C07F 9/655

(54) **Verfahren zur Herstellung von Phosphonsäureestern**

(30) Priorität: 27.07.1994 DE 4426561
(71) Anmelder: BASF Aktiengesellschaft, D-67063 Ludwigshafen (DE)
(72) Erfinder: Ditrich, Klaus, Dr., D-67161 Gönnheim (DE); Krause, Wolfgang, Dr., D-68782 Brühl (DE)

(57) **Zusammenfassung**

Herstellung von Phosphonsäureestern I 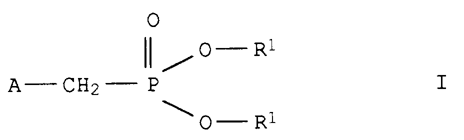
(A = aromatischer Rest oder eine α,β-olefinisch ungesättigte Gruppe, R¹ = C₁-C₄-Alkylgruppe oder die Phenylgruppe), indem man ein Phosphit II 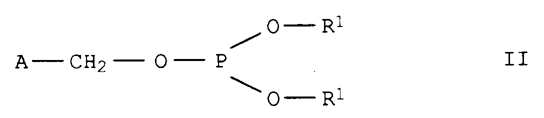
in Gegenwart katalytisch wirksamer Mengen einer Halogenionen liefernden Verbindung (III) zu I umlagert.

Die Verbindungen I dienen als Zwischenprodukte für organische Synthesen, insbesondere von Polyenen.

## Beschreibung

Die vorliegende Erfindung betrifft ein Verfahren zur Herstellung von Phosphonsäureestern der allgemeinen Formel I 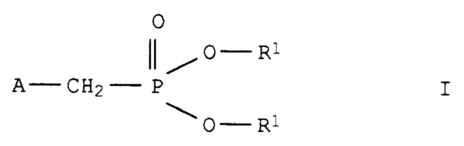
in der A für einen aromatischen Rest oder eine α,β-olefinisch ungesättigte Gruppe steht und R¹ eine C₁-C₄-Alkylgruppe oder die Phenylgruppe bedeutet, aus Phosphiten der allgemeinen Formel II 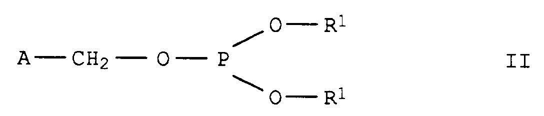
Weiterhin betrifft die Erfindung ein Verfahren zur Herstellung der Phosphonsäureester I, ausgehend von Phosphoniten IV sowie einige neue Phosphonsäureester I.

Phosphonsäureester der Formel I können bekanntermaßen mit Carbonylverbindungen zu olefinisch ungesättigten Verbindungen nach Art einer Wittigreaktion umgesetzt werden, wie z.B. in Tetrahedron Letters 31(1990)3129 beschrieben. Diese Reaktion findet u.a. Anwendung bei der Synthese von Feinchemikalien und Wirkstoffen wie Vitaminen.

Die Herstellung dieser Verbindungen erfolgte bisher bekanntermaßen durch Umsetzung von Trialkylphosphiten und halogenierten Kohlenwasserstoffen in einer Michaelis-Arbusov-Reaktion (A. Michaelis, R. Kaehne, Ber. 31(1898)1048). Dabei entsteht unerwünschterweise als Zwangsanfall in äquimolarer Menge ein Alkylhalogenid. So läßt sich gemäß der EP-A 430 807 aus der Bromverbindung 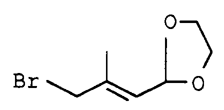
und Triethylphosphit der Phosphonsäureester 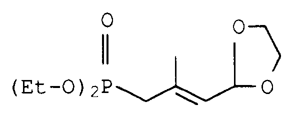
herstellen.

Zur Vermeidung des Zwangsanfalls an halogenierten Kohlenwasserstoffen bei der Synthese von Alkylphosphonsäureestern wurden in der Vergangenheit zahlreiche Versuche unternommen. So kann gemäß der BE-A 803 856 ein Phosphit 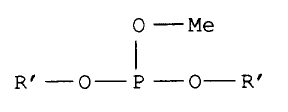
R' = längerkettiger Rest
Me = Methyl
in Gegenwart katalytischer Mengen Methyliodid in einen Phosphonsäureester umgelagert werden, wobei aber stets die Methylgruppe an den Phosphor wandert, d.h. man erhält Phosphonsäureester des Typs 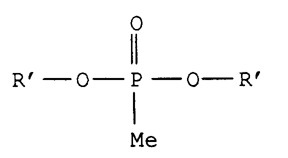
Ferner ist es erwünscht, statt der organischen Halogenide, die üblicherweise aus den entsprechenden Alkoholen oder Estern organischer Säuren hergestellt werden, direkt diese Alkohole bzw. Ester einzusetzen.

Der Erfindung lag daher die Aufgabe zugrunde, die Verbindungen I auf technisch einfachere sowie wirtschaftlichere Weise herzustellen als bisher.

Demgemäß wurde ein Verfahren zur Herstellung von Phosphonsäureestern der allgemeinen Formel I 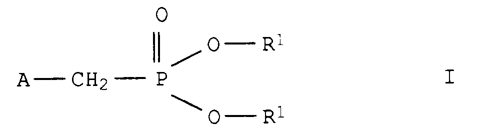
in der A für einen aromatischen Rest oder eine α,β-olefinisch-ungesättigte Gruppe steht und R¹ eine C₁-C₄-Alkylgruppe oder die Phenylgruppe bedeutet, gefunden, welches dadurch gekennzeichnet ist, daß man ein Phosphit der allgemeinen Formel II 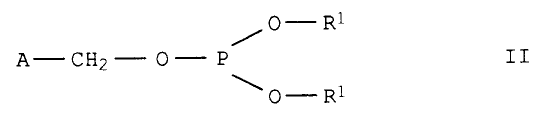
in Gegenwart katalytisch wirksamer Mengen einer Halogenionen liefernden Verbindung (III) zu I umlagert.

Die Ausgangsverbindungen II sind bekannt oder in an sich bekannter Weise erhältlich, und zwar besonders vorteilhaft durch Umsetzung eines Phosphits der allgemeinen Formel IV 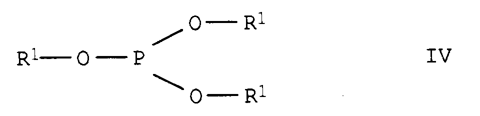
mit einem Alkohol oder Ester der allgemeinen Formel V

A-CH₂-O-R² V

in der R² Wasserstoff, eine C₁-C₄-Alkylcarbonylgruppe, bevorzugt die Acetylgruppe, oder die Benzoylgruppe bedeutet, in Gegenwart einer Base zu II umsetzt.

Ist A eine α,β-olefinisch ungesättigte Gruppe, handelt es sich bei den Ausgangsverbindungen V allgemein um Alkohole bzw. Ester mit Allylalkohol-Struktur.

Bevorzugte Reste A sind im Hinblick auf die besonders erwünschten Verfahrensprodukte I solche der allgemeinen Formel VI 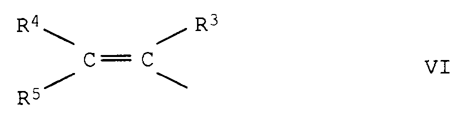
in der die Substituenten folgende Bedeutung haben
- R³: Wasserstoff oder eine C₁-C₄-Alkylgruppe
- R⁴,R⁵: Wasserstoff oder eine Alkyl-, Alkenyl-, Aryl-, Heteroaryl-,Dialkoxymethyl- oder Alkoxycarbonylgruppe.

Besonders wichtige Verbindungen der Formel V sind
3-(5,5-Dimethyl-1,3-dioxan-2-yl)-2-butenol 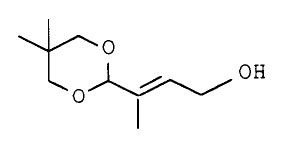
3-(5,5-Dimethyl-1,3-dioxan-2-yl)-2-methyl-propenol 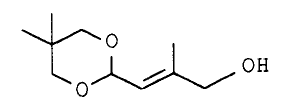
und Geraniol 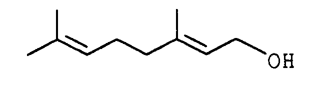
Ist A ein aromatischer Rest, so leiten sich die Alkohole bzw. Ester vom Benzylalkohol ab. Hier haben als Reste A besondere Bedeutung die Phenylgruppe oder eine halogen- alkoxy-, alkyl- oder perfluoralkylsubstituierte Phenylgruppe.

Als Phosphite der allgemeinen Formel IV, die zur Umesterung eingesetzt werden, kommen insbesondere solche in Betracht, die sich von leicht flüchtigen Alkoholen ableiten, also vorzugsweise Trimethylphosphit und Triethylphosphit. Daneben ist auch das handelsübliche Triphenylphosphit für die Umesterungen gut geeignet.

Um die mehrfache Umesterung zu zu unterdrücken, setzt man das Phosphit mit der Verbindung V in einem molaren Verhältnis von 1:1 bis 3:1, bevorzugt 1:1 bis 2:1, ein.

Bei der Herstellung von II können als Basen vorteilhaft tertiäre Amine, Erdalkalimetallhydroxide und vor allem Alkalimetallhydroxide verwendet werden. Daneben kommen Alkalimetall- und Erdalkalimetallalkoholate in Betracht, darunter besonders diejenigen der C₁-C₄-Alkanole. Man verwendet die Basen vorzugsweise in einer Menge von 1 bis 100, besonders 20 bis 100 mol-%, bezogen auf die Menge von II.

Die Reaktionen zur Herstellung von II und I können in Gegenwart eines polaren Lösungsmittels wie Dimethylformamid oder eines Alkanols, insbesondere eines C₁-C₄-Alkanols durchgeführt werden. In manchen Fällen kommt auch Wasser in Betracht. Vorzugsweise arbeitet man aber lösungsmittelfrei.

Der bei der Reaktion entstehende gemischte Phosphorigsäureester II kann isoliert oder vorteilhaft ohne Isolierung unmittelbar zu dem Phosphonsäureester I umgesetzt werden. Bei der letztgenannten Umsetzung werden katalytische Mengen einer Halogenionen liefernden Verbindung III mitverwendet. Als Halogenionen liefernde Verbindung III kommen besonders Iodverbindungen wie Alkalimetall- und Erdalkalimetalliodide, darunter vor allem Lithiumiodid, sowie elementares Iod in Betracht. Daneben sind auch die entsprechenden Chloride und Bromide geeignet. Die Menge der Verbindungen III beträgt vorzugsweise 0,01 bis 10, besonders 0,1 bis 5 mol-%, bezogen auf die Menge von II.

Die Reaktion wird vorteilhaft bei erhöhter Temperatur, bevorzugt 80 bis 160°C, durchgeführt, so daß sich Reaktionszeiten von 0.5 bis 16 Stunden, in der Regel 1 bis 10 Stunden ergeben. Dabei kann aus dem eingesetzten Phosphit IV entstehender Alkohol bzw. dessen Carboxylat abdestilliert werden, sofern diese Verbindungen leichtflüchtig sind.
Die Reinigung des Rohproduktes kann nach den bekannten Methoden erfolgen, vorzugsweise durch fraktionierte Destillation, insbesondere unter vermindertem Druck.

### Beispiele 1-11

### a) Herstellung von Phosphonsäureestern I über isolierten gemischten Phosphorigsäureester II

### 1. Herstellung des gemischten Phosphorigsäureesters

Ein Gemisch aus 1 mol Alkohol bzw. Ester V, 2 mol Triethylphosphit IV und 30 mmol Kalium-tert.-butanolat (bei Einsatz eines Alkohols) bzw. 50 mmol Natriummethanolat (bei Einsatz eines Esters) wurde zunächst auf 90°C und anschließend innerhalb von 3 Stunden auf 140°C erhitzt. Dabei begann Ethanol bzw. Ethylacetat abzudestillieren. Überschüssiges Triethylphosphit wurde in 2 Stunden bei 120°C/15 mbar destillativ abgetrennt, wonach das Phosphit II durch fraktionierte Destillation gereinigt wurde.

### 2. Umlagerung des Phosphits zum Phosphonsäureester

Ein Gemisch aus 1 mol Phosphit II aus Stufe 1 und 10 mmol Lithiumiodid oder 1 mmol Iod wurde 2 Stunden auf 140°C erhitzt. Durch fraktionierte Destillation wurde der Phosphonsäureester I erhalten.

### b) Herstellung von I ausgehend von Phosphit IV

Ein Gemisch aus 1 mol Alkohol bzw. Ester V, 2 mol Triethylphosphit, 30 mmol Kalium-tert.-butanolat und 10 mmol Lithiumiodid wurde auf 90°C erhitzt. Dabei begann Ethanol abzudestillieren. Innerhalb von drei Stunden wurde die Temperatur durch halbstündige Erhöhung der Temperatur um 10°C auf die Endtemperatur von 140°C gebracht. Anschließend wurde überschüssiges Triethylphosphit abdestilliert, und der Rückstand wurde dann drei Stunden auf 140°C erhitzt. Das Produkt wurde durch fraktionierte Destillation erhalten.

Die Einzelheiten dieser Versuche sowie deren Ergebnisse sind der nachstehenden Tabelle zu entnehmen.

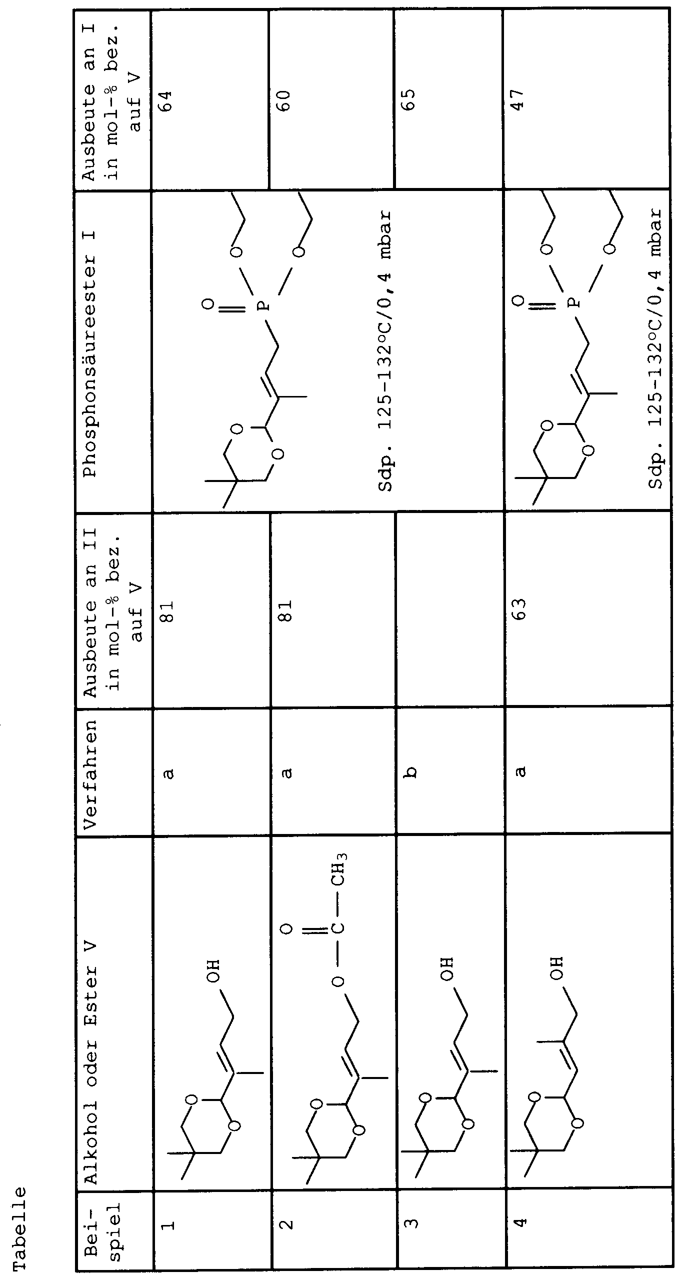

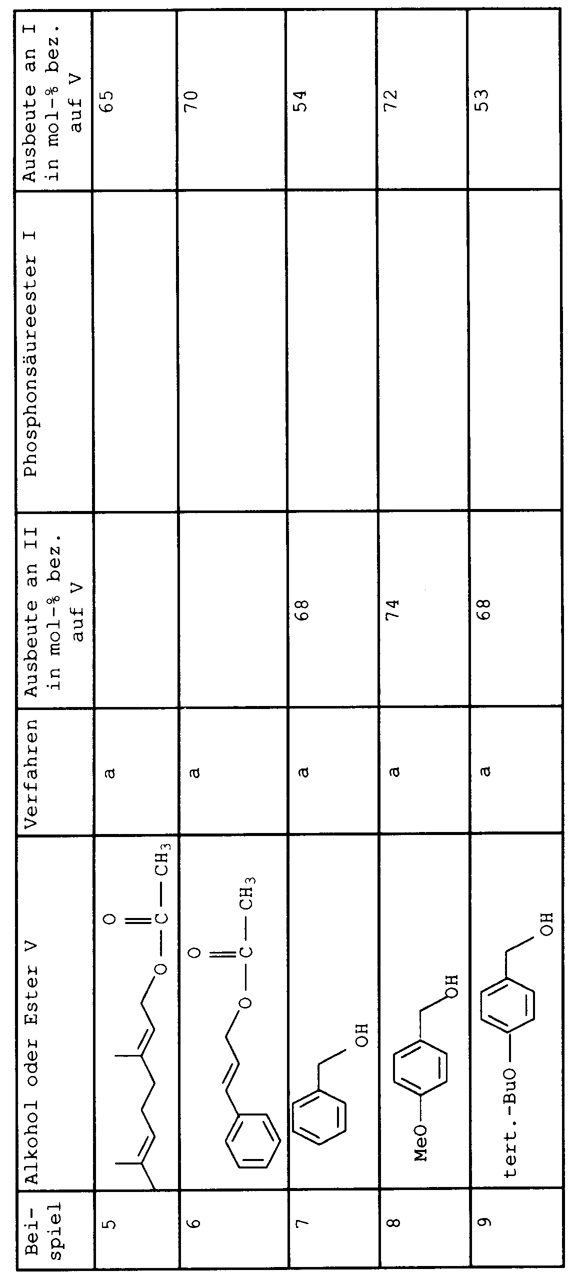

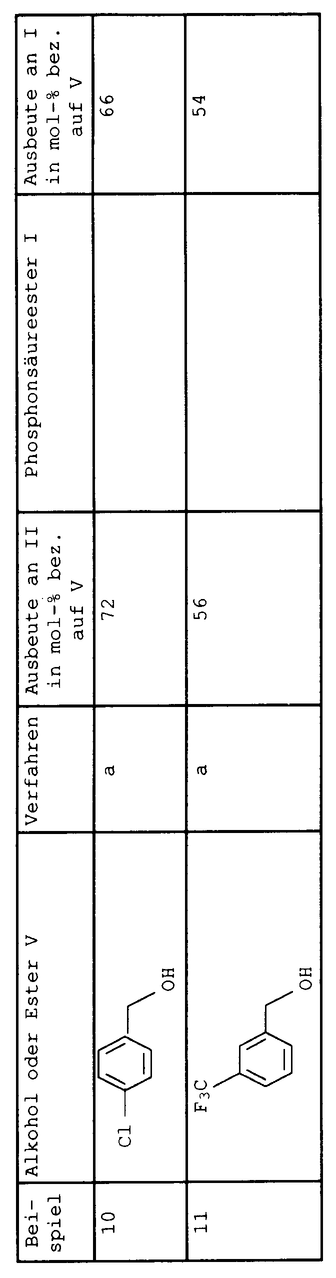

## Patentansprüche

1. Verfahren zur Herstellung von Phosphonsäureestern der allgemeinen Formel I 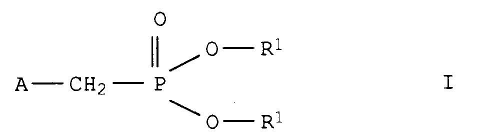 in der A für einen aromatischen Rest oder eine α,β-olefinisch ungesättigte Gruppe steht und R¹ eine C₁-C₄-Alkylgruppe oder die Phenylgruppe bedeutet, dadurch gekennzeichnet, daß man ein Phosphit der allgemeinen Formel II 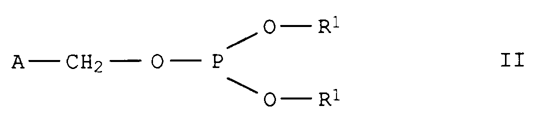 in Gegenwart katalytisch wirksamer Mengen einer Halogenionen liefernden Verbindung (III) zu I umlagert.

2. Verfahren zur Herstellung der Phosphonsäureester I gemäß Anspruch 1, dadurch gekennzeichnet, daß man ein Phosphit der allgemeinen Formel IV 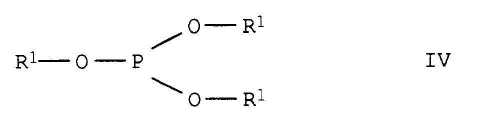 mit einem Alkohol oder Ester der allgemeinen Formel V
A-CH₂-O-R² V
in der R² Wasserstoff, eine C₁-C₄-Alkylcarbonylgruppe oder die Benzoylgruppe bedeutet, in Gegenwart einer Base zu II umsetzt und II, ohne es aus dem Reaktionsgemisch zu isolieren, mit Hilfe katalytisch wirksamer Mengen der Halogenionen liefernden Verbindung III zu I umlagert.

3. Verfahren nach Anspruch 1 oder 2, dadurch gekennzeichnet, daß man es auf die Herstellung solcher Phosphonsäureester I anwendet, in denen A eine Gruppe der allgemeinen Formel VI 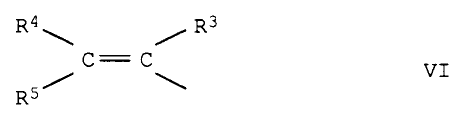 bedeutet, in der die Substituenten folgende Bedeutung haben:
R³ Wasserstoff oder eine C₁-C₄-Alkylgruppe
R⁴, R⁵ Wasserstoff oder eine Alkyl-, Alkenyl-, Aryl-, Heteroaryl-, Dialkoxymethyl- oder Alkoxycarbonylgruppe.

4. Verfahren nach den Ansprüchen 1 bis 3, dadurch gekennzeichnet, daß man es auf die Herstellung solcher Verbindungen I anwendet, in denen R¹ die Ethylgruppe bedeutet.

5. Verfahren nach den Ansprüchen 1 bis 4, dadurch gekennzeichnet, daß man als Halogenionen liefernde Verbindung III eine Iodionen liefernde Verbindung verwendet.

6. Verfahren nach Anspruch 5, dadurch gekennzeichnet, daß man als Iodionen liefernde Verbindung ein Alkalimetalliodid oder Iod verwendet.

7. Phosphonsäureester der Formeln 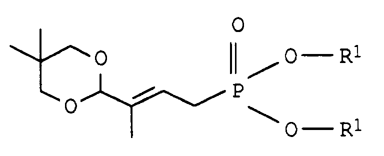 und 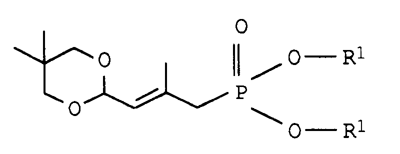 in denen R¹ eine C₁-C₄-Alkylgruppe oder die Phenylgruppe bedeutet.
